(19) Europäisches Patentamt
European Patent Office
Office européen des brevets

(11) **EP 4 489 207 A1**

(12) **EUROPEAN PATENT APPLICATION**
published in accordance with Art. 153(4) EPC

(43) Date of publication:
**08.01.2025 Bulletin 2025/02**

(21) Application number: 23904052.0

(22) Date of filing: **15.12.2023**

(51) International Patent Classification (IPC):
$H01M\ 50/46^{(2021.01)}$    $H01M\ 10/04^{(2006.01)}$
$H01M\ 10/0585^{(2010.01)}$    $H01M\ 50/446^{(2021.01)}$
$H01M\ 50/451^{(2021.01)}$    $H01M\ 4/36^{(2006.01)}$
$H01M\ 4/587^{(2010.01)}$    $H01M\ 4/48^{(2010.01)}$

(52) Cooperative Patent Classification (CPC):
**H01M 4/36; H01M 4/48; H01M 4/587; H01M 10/04;
H01M 10/0585; H01M 50/446; H01M 50/451;
H01M 50/46;** Y02E 60/10; Y02P 70/50

(86) International application number:
**PCT/KR2023/020757**

(87) International publication number:
**WO 2024/128853 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022   KR 20220177156
16.12.2022   KR 20220177177
16.12.2022   KR 20220177190
14.12.2023   KR 20230181456**

(71) Applicant: **LG Energy Solution, Ltd.
Seoul 07335 (KR)**

(72) Inventors:
• **BAE, Won Sik
Daejeon 34122 (KR)**
• **LEE, So Yeong
Daejeon 34122 (KR)**
• **RYU, Bi Oh
Daejeon 34122 (KR)**
• **SUNG, Dongwook
Daejeon 34122 (KR)**
• **LEE, Byeong Kyu
Daejeon 34122 (KR)**

(74) Representative: **Hoffmann Eitle
Patent- und Rechtsanwälte PartmbB
Arabellastraße 30
81925 München (DE)**

(54) **ELECTRODE ASSEMBLY AND SECONDARY BATTERY COMPRISING SAME**

(57)     Positive electrode; negative electrode; and an electrode assembly comprising a separator provided between the positive electrode and negative electrode, wherein the separator has a wet adhesion to the negative electrode of 1.5 gf/20mm or more and 15 gf/20mm or less, and a secondary battery comprising the same. When the wet adhesion of the separator of the electrode assembly to the negative electrode satisfies the above range, distortion of the electrode assembly is effectively prevented before impregnation with the electrolyte solution, and at the same time, after impregnation with the electrolyte solution, the bending phenomenon after activation of the electrode assembly and the secondary battery including it is further reduced, and it can be suppressed effectively.

[Figure 3]

**EP 4 489 207 A1**

**Description**

[Technical Field]

[Cross-Reference to Related Application]

This application claims priority to and the benefit of Korean Patent Application Nos. 10-2022-0177177, 10-2022-0177190, and 10-2022-0177156 filed with the Korean Intellectual Property Office on December 16, 2022, the entire contents of which are incorporated herein by reference.

The present invention relates to an electrode assembly and a secondary battery including the same.

[Background Art]

Secondary batteries are classified into coin batteries, cylindrical batteries, angular batteries, and pouch-type batteries depending on shapes of battery casings. Unlike primary batteries, the secondary batteries may be rechargeable and have small scales and high capacities. Recently, research and development have been actively conducted on the secondary batteries.

With the recent increase in proliferation of electric vehicles, there are increasing technology development and demands for high-capacity secondary batteries used for the electric vehicle. In order to manufacture the high-capacity secondary battery, a size of an electrode assembly mounted in the battery casing is also increased. The increase in size of the electrode assembly may cause unexpected problems with the small-sized electrode assembly.

The electrode assembly is a power generation element that has a structure made by stacking electrodes and separators and may be charged and discharged. The separator includes an organic/inorganic composite porous coating layers and provides a bonding force between the electrode and the separator.

[Document of Related Art]

[Patent Document]

Korean Patent Application Laid-Open No. 10-2013-0132230

[Detailed Description of the Invention]

[Technical Problem]

The electrode assembly is mounted in the battery casing and then used to manufacture the secondary battery by a packaging process and/or an activation process. However, in case that a negative electrode includes a silicon-based active material, an expansion ratio of the negative electrode before and after the activation process is larger in magnitude than an expansion ratio of a positive electrode, which causes a bending situation in which the electrode assembly is bent or warped because of non-uniformity of a bonding force between the separator and the electrode, which causes a problem in that the secondary battery including the electrode assembly is deformed in shape.

In particular, in case that the size of the electrode assembly, such as the high-capacity electrode assembly, increases, a difference between the expansion ratio of the negative electrode and the expansion ratio of the positive electrode more greatly affects the bending situation, which makes the bending situation more severe. Accordingly, there is a need to develop a technology to prevent a situation in which the high-capacity electrode assembly or the secondary battery including the same are bent.

[Technical Solution]

An embodiment of the present invention provides an electrode assembly including: a positive electrode; a negative electrode; and a separator provided between the positive electrode and the negative electrode, in which a wet bonding force of the separator with respect to the negative electrode is 1.5 gf/20 mm or more and 15 gf/20 mm or less.

Another embodiment of the present invention provides a secondary battery including: a sealed battery casing; the electrode assembly according to the above-mentioned embodiment included in the battery casing; and an electrolyte included in the battery casing, in which the secondary battery satisfies Expression 1 below,

[Expression 1]

$$X < 5 \text{ mm}$$

in Expression 1, X represents a maximum distance measured from an imaginary reference line, which connects two opposite sides of an upper surface of the secondary battery, to a lowest point of the upper surface of the secondary battery in a state in which the secondary battery is placed on a flat surface so that a concave surface of the secondary battery is directed upward after an activation process of the secondary battery.

[Advantageous Effects]

According to the electrode assembly according to the embodiment of the present invention, it is possible to prevent the bending situation that may occur after the activation of the secondary battery including the electrode assembly. In particular, it is possible to prevent the bending situation of the electrode assembly having a large size.

According to the electrode assembly according to the embodiment of the present invention, it is possible to improve an assembling yield by preventing a process defect after the battery activation by preventing the bending situation and to improve the energy density by aligning and fixing the position of the electrode so that the position of the electrode is not misaligned.

According to the secondary battery including the electrode assembly according to the embodiment of the present invention, the bending situation of the secondary battery may be prevented, such that the assembling yield may be improved after the activation, the degree of alignment of the electrode may be appropriately maintained, and the cell performance may be appropriately maintained.

[Brief Description of Drawings]

FIG. 1 is a view schematically illustrating a cross-section of a separator according to a specific embodiment of the present invention.
FIG. 2 is a view illustrating a surface image of the separator according to the specific embodiment of the present invention.
FIG. 3 is a view for explaining that a problem caused by a bending situation greatly occurs in the case of a large-area electrode assembly.
FIG. 4 is a view illustrating one of the methods of measuring bending of the electrode assembly according to the present application.
FIG. 5 is a view schematically illustrating the separator according to the present invention.
FIG. 6 is a cross-sectional view illustrating a process flow of an electrode assembly manufacturing apparatus according to the embodiment of the present invention.
FIG. 7 is a plan view illustrating the process flow of the electrode assembly manufacturing apparatus according to the embodiment of the present invention.
FIG. 8 is a cross-sectional view exemplarily illustrating an electrode assembly manufactured by the electrode assembly manufacturing apparatus and an electrode assembly manufacturing method according to the embodiment of the present invention.
FIG. 9(a) is a perspective view illustrating a first heat press part 50, and FIG. 9(b) is a perspective view illustrating a second heat press part 60.
FIG. 10 is an image captured to identify the presence of creases on a separator of an electrode assembly of Example 1, and FIG. 11 is an image captured to identify the presence of creases on a separator of an electrode assembly of Comparative Example 14.
FIG. 12 is an image captured to identify a serpentine shape of the electrode assembly of Example 1, and FIG. 13 is an image captured to identify a serpentine shape of an electrode assembly of Comparative Example 11.

[Best Mode]

Hereinafter, the present invention will be described in detail so that those with ordinary skill in the art to which the present invention pertains may easily carry out the present invention. However, the present invention may be implemented in various different ways and is not limited to the embodiments described herein.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, an "area" of an electrode assembly means an area of a surface visible when the electrode assembly is viewed from the top side in a stacking direction in which electrodes and separators included in the electrode assembly are stacked. That is, the area means an area of a surface of the electrode assembly orthogonal to a stacking axis.

In the present specification, a "dry bonding force" means a bonding force of the separator measured in a case in which the electrode assembly including the separator is not impregnated with an electrolyte. That is, the dry bonding force means a bonding force of the separator measured before an activation step of the electrode assembly. In the present specification, the dry bonding force is also called a bonding force of the separator in a dried state.

In the present specification, a "wet bonding force" means a bonding force of the separator measured in a state in which the electrode assembly including the separator is impregnated with the electrolyte. That is, the wet bonding force may mean a bonding force of the separator measured after the activation step of the electrode assembly or after the battery is charged or discharged. In the present specification, the wet bonding force is also called a bonding force of the separator in a state of being impregnated with the electrolyte.

In the present specification, the dry bonding force and the wet bonding force may be measured by preparing a specimen in the form of a stack made by stacking a positive electrode, a separator, and a negative electrode and cutting an electrode assembly into a size of 20 mm X 70 mm, and peeling the separator off the specimen at a rate of 100 mm/min from one side of the separator in a 90° peeling mode by using a tensile tester (UTM equipment). In this case, the measurement is performed in a peeling direction that is a direction in which the specimen is long (a direction parallel to a 70 mm side). That is, the methods of measuring the dry bonding force and the wet bonding force are identical to each other, except that the electrode assembly is impregnated with the electrolyte. In addition, an absolute value of a difference between the measured bonding forces may be defined as a deviation between the bonding forces.

In the present specification, the "activation" or "activation process" of the secondary battery means a process (or step) of activating the secondary battery and removing gases through the process of charging the secondary battery.

## <Electrode Assembly>

The embodiment of the present invention provides the electrode assembly in which the separator has the wet bonding force with a predetermined magnitude with respect to the negative electrode. That is, this means that even after the electrode assembly according to the present invention is impregnated with the electrolyte, the separator has the bonding force with a predetermined magnitude with respect to the negative electrode. The bonding force between the separator and the negative electrode may be affected by the type and physical properties of the separator, a material of a coating layer on a surface of the separator, a lamination condition of the electrode assembly, an activation condition, a material of the negative electrode, and the like. For example, the wet or dry bonding force with respect to the negative electrode may vary depending on the type, physical properties, or materials of the separator. In addition, the wet or dry bonding force between the separator and the negative electrode may vary an activation condition of the secondary battery and/or a condition applied to a process of laminating the positive electrode, the negative electrode, and the separator of the electrode assembly. In addition, a degree to which the negative electrode is expanded or bent during the process of charging or discharging the secondary battery may vary depending on the material of the negative electrode, and the degree may affect the wet or dry bonding force between the separator and the negative electrode.

In the embodiment of the present invention, the wet bonding force of the separator with respect to the negative electrode is 1.5 gf/20 mm or more and 15 gf/20 mm or less. For example, the wet bonding force of the separator with respect to the negative electrode may be 2 gf/20 mm or more, 2.5 gf/20 mm or more, 3 gf/20 mm or more, 3.5 gf/20 mm or more, or 4 gf/20 mm or more. The wet bonding force of the separator with respect to the negative electrode may be 15 gf/20 mm or less, 12 gf/20 mm or less, 10 gf/20 mm or less, 8 g f/20 mm or less, 7 gf/20 mm or less, 6 gf/20 mm or less, or 5 gf/20 mm or less.

In case that the wet bonding force satisfies the above-mentioned range, the wet bonding force of the separator with respect to the negative electrode has a predetermined value or more, such that the wet bonding force may serve to fix the separator and the negative electrode. Further, because an excessive wet bonding force is not applied, it is possible to easily prevent the bending situation of the electrode assembly during the process of activating the secondary battery including the electrode assembly. That is, it is possible to improve the performance of the secondary battery.

In the embodiment of the present invention, the dry bonding force of the separator with respect to the negative electrode may be 8 gf/20 mm or more, 10 gf/20 mm or more, 12 gf/20 mm or more, 14 gf/20 mm or more, or 15 gf/20 mm or more. In addition, the dry bonding force of the separator with respect to the negative electrode may be 25 gf/20 mm or less, 23 gf/20 mm or less, 20 g f/20 mm or less, or 18 gf/20 mm or less. In case that the dry bonding force satisfies the above-mentioned range, the electrode assembly, which is manufactured by a stacking process, may be more easily transferred in a state in which a stacked structure is maintained. That is, it is possible to prevent the performance electrode assembly from being degraded by the misalignment of the position of the electrode during the transfer process, and as a result, the performance of the manufactured electrode assembly is more excellent. In addition, because an excessive dry bonding force is not applied, the wet bonding force may advantageously have an appropriate level after the impregnation with the electrolyte.

For example, the wet bonding force may be 40% or less, 35% or less, or 33% or less of the dry bonding force. As still another example, the wet bonding force may be 10% or more, 150 or more, 20% or more, or 25% or more of the dry bonding force. In case that the wet bonding force of the separator of the electrode assembly with respect to the negative electrode satisfies the above-mentioned range, it is possible to effectively prevent the misalignment of the electrode assembly before the impregnation with the electrolyte, and it is possible to more effectively suppress the bending situation after the activation of the electrode assembly and the secondary battery including the same after the impregnation with the electrolyte. Specifically, the higher dry bonding force is required to maintain the stacked structure of the electrode assembly during the stacking process. However, in case that the dry bonding force is excessively high when the wet bonding force is within the above-mentioned range, the bending may be further accelerated because of a difference in expansion ratio between the negative electrode and the positive electrode.

According to the embodiment, the negative electrode includes a silicon-based active material. In this case, after the activation, the negative electrode has a higher expansion ratio than the positive electrode that does not include a silicon-based active material. In this case, in case that the bonding force does not satisfy the range, the non-uniformity of the bonding force between the separator and the electrode occurs because of the expansion of the negative electrode and the difference in expansion ratio between the negative electrode and the positive electrode, and the non-uniformity causes the bending situation in which the electrode assembly is bent or warped.

However, according to the electrode assembly according to the present invention, the separator of the electrode assembly has the dry and wet bonding forces with the predetermined magnitudes with respect to the negative electrode, which may prevent the distortion of the stacked structure of the electrode and the separator included in the electrode assembly during the electrode assembly manufacturing process and minimize the occurrence of the non-uniformity the bonding force between the electrode and the separator caused by the expansion of the negative electrode and the difference in expansion ratio between the negative electrode and the positive electrode. That is, it is possible to simultaneously prevent the distortion of the stacked structure of the electrode and the separator during the stacking process and prevent the bending situation after the bending activation.

In the embodiment of the present invention, the separator may include fluorine (F) of 0.1 parts by weight or more, 2 parts by weight or more, 3 parts by weight or more, or 4 parts by weight or more based on 100 parts by weight of a separator surface composition. The separator may include fluorine (F) of 8 parts by weight or less, 6 parts by weight or less, or 5 parts by weight or less based on 100 parts by weight of the separator surface composition.

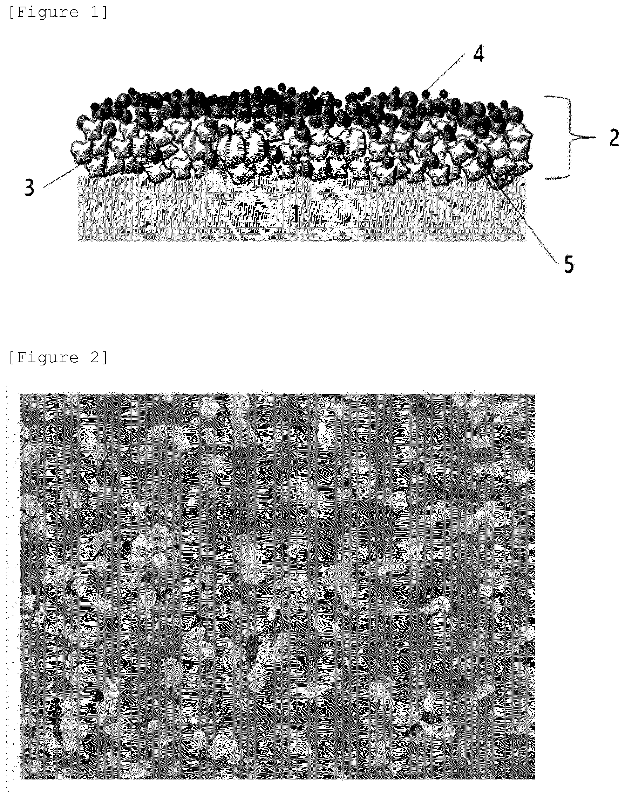

In the present specification, the surface of the separator may be observed by capturing an image of the surface of the separator by using a scanning electron microscope (SEM). The "separator surface composition" means a composition measured from a portion (hereinafter, referred to as a 'separator surface') observed according to a result of obtaining the separator by disassembling the secondary battery after the activation process of the secondary battery, impregnating the separator with a dimethyl carbonate solvent for 30 minutes and drying the separator for 24 hours under a room temperature condition in order to remove electrolyte additives or metal salt components that may remain on the surface of the separator, and then capturing an image of the portion, on which an organic/inorganic composite porous coating layer of the separator is formed, under a 15.0 kV acceleration voltage condition and with 10,000 magnification by using the scanning electron microscope (SEM), as illustrated in FIG. 2.

More specifically, the compositions, which are measured by analyzing the separator surface with energy dispersive X-ray spectroscopy (EDS), are defined as the separator surface compositions. A total sum of the compositions measured by analyzing the separator surface with the energy dispersive X-ray spectroscopy (EDS), i.e., the entire elements included in the portion visible on the SEM image may be defined as 100 parts by weight. In this case, the analysis of the surface compositions using the energy dispersive X-ray spectroscopy (EDS) may be performed by capturing images with 15 kV and 10,000 magnification.

That is, the configuration in which fluorine (F) of 0.1 parts by weight to 8 parts by weight is included based on 100 parts by weight of the separator surface composition means that a relative content of fluorine corresponds to 0.1 to 8 based on 100 parts by weight.

The configuration in which the separator includes fluorine (F) within the above-mentioned range based on 100 parts by weight of the separator surface composition means that the separator includes a fluorine-based binder even before the separator is impregnated with the electrolyte. With the presence of the fluorine-based binder, the separator may have the bonding force (dry bonding force) with respect to the electrode even before the electrode assembly according to the present invention is impregnated with the electrolyte. In addition, the configuration in which the above-mentioned content of fluorine is included in the separator surface means that the range of the dry bonding force of the electrode assembly may be satisfied.

In the embodiment of the present invention, the separator may be folded in a zigzag manner and stacked. That is, the electrode assembly according to the embodiment of the present invention may be manufactured by zigzag stacking.

In the present specification, the zigzag stacking means a configuration in which the positive electrodes and the negative electrodes are stacked and disposed alternately between the folded separators.

In this case, the configuration in which the positive electrodes and the negative electrodes are alternately disposed between the folded separators will be more specifically described. The folded separator may mean a separator in a shape in which the separators are stacked while overlapping one another in a zigzag manner. More specifically, the separators are stacked in a zigzag manner while being folded in a shape in which the separators are alternately disposed at a left side of the stacking axis and a right side of the stacking axis based on the stacking axis. Further, the positive electrodes and the negative electrodes are alternately disposed and stacked between the stacked separators. In this case, the stacking axis means an axis parallel to a direction in which the positive electrode, the separator, and the negative electrode are stacked. The stacking axis means an imaginary axis passing through a center of the stack in which the electrodes and the separator are stacked.

That is, the configuration in which the positive electrodes and the negative electrodes are disposed alternately between the separators means that the separators are stacked in the direction of the stacking axis while overlapping one another in a zigzag manner, and the positive electrodes and the negative electrodes are alternately inserted one by one into spaces (between the separators) defined when the separators overlap one another.

In order to implement the zigzag stacking, technologies or devices, which are typically used in the corresponding field, may be used.

In the embodiment of the present invention, a rated capacity of the electrode assembly may be 50 Ah to 200 Ah, particularly 50 Ah to 150 Ah, and more particularly 60 Ah to 140 Ah.

In the embodiment of the present invention, the wet bonding force of the separator with respect to the negative electrode may be higher than the wet bonding force of the separator with respect to the positive electrode.

In the embodiment of the present invention, the wet bonding force of the separator with respect to the negative electrode may be one or more times, 1.1 or more times, or 1.2 or more times the wet bonding force of the separator with respect to the positive electrode. The wet bonding force of the separator with respect to the negative electrode may be less than 1.5 times or 1.4 or less times the wet bonding force of the separator with respect to the positive electrode.

For example, a difference between a magnitude of the wet bonding force of the separator with respect to the negative electrode and a magnitude of the wet bonding force of the separator with respect to the positive electrode may be 5 gf/20 mm or less, 3 gf/20 mm or less, 1.5 gf/20 mm or less, or 1.2 gf/20 mm or less. The difference means an absolute value of a difference in magnitude between the bonding forces.

As described above, the wet bonding force is measured in the state in which the electrode assembly is impregnated with the electrolyte. A small difference between the wet bonding forces is advantageous in preventing a bending effect.

In the embodiment of the present invention, the dry bonding force of the separator with respect to the negative electrode may be higher than the dry bonding force of the separator with respect to the positive electrode.

For example, the dry bonding force of the separator with respect to the negative electrode may be one or more times or 1.1 or more times the dry bonding force of the separator with respect to the positive electrode. In addition, the dry bonding force of the separator with respect to the negative electrode may be 2.5 or less times, 2 or less times, 1.5 or less times, or 1.3 or less times the dry bonding force of the separator with respect to the positive electrode.

In the embodiment of the present invention, the difference between the magnitude of the dry bonding force of the separator with respect to the negative electrode and the magnitude of the dry bonding force of the separator with respect to the positive electrode may be 10 gf/20 mm or less, 8 gf/20 mm or less, 7 gf/20 mm or less, 5 gf/20 mm or less, 4 gf/20 mm or less, or 3 gf/20 mm or less. The difference means an absolute value of a difference in magnitude between the bonding forces.

When the difference between the dry bonding forces decreases, the difference between the wet bonding forces may be maintained so as not to be high during the process performed after the stacking process.

In the embodiment of the present invention, an upper surface of the electrode assembly has a rectangular shape having a short side and a long side, and a ratio of a length of the long side to a length of the short side may be 3 or more and 12 or less. The rectangular shape means a shape when the electrode assembly is viewed in the stacking direction.

In the embodiment of the present invention, an area of the electrode assembly may be 500 cm$^2$ or more.

In the embodiment of the present invention, an overall length of the electrode assembly may be 400 mm or more, and an overall width of the electrode assembly may be 50 mm or more.

More specifically, in the embodiment of the present invention, one surface of the electrode assembly has a rectangular shape having a short side and a long side. An overall length of the electrode assembly may be 400 to 600 mm, and an overall width of the electrode assembly may be 50 to 150 mm.

The electrode assembly having the above-mentioned sizes may be defined as a large-area electrode assembly in the present specification.

In the embodiment of the present invention, the overall length of the electrode assembly means a length of the long side of the electrode assembly and means a length in a direction perpendicular to a direction in which the separator is supplied when the separator is supplied to manufacture the electrode assembly.

Because the electrode assembly, which has many stacked electrodes and has the overall length of 400 mm or more, is greatly affected by a difference in expansion ratio between the negative electrode and the positive electrode, there may occur a great problem caused by the bending situation in which the electrode assembly is sagged or warped.

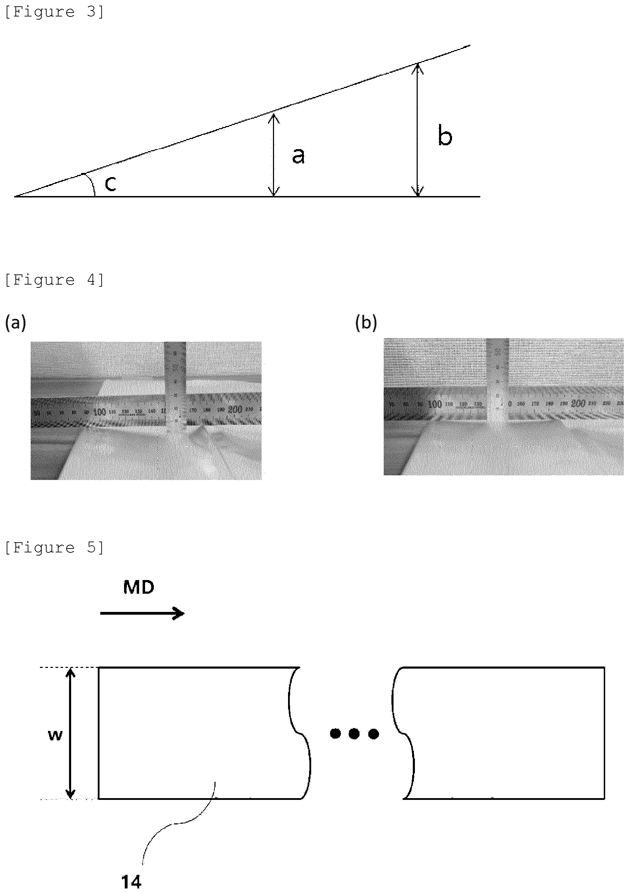

As illustrated in FIG. 3, it can be seen that a distance from a horizontal line increases as a distance from a reference point increases even though an angle c has a constant value. That is, when a distance from the horizontal line to an end of the electrode assembly is a in case that the small-scale electrode assembly is sagged or warped by an angle c, a distance from the horizontal line to an end of a large-scale electrode assembly is b under the same condition. That is, it can be seen that the distance from the horizontal line to the end of the electrode assembly is long in the case of the large-scale electrode assembly. This means that the large-scale electrode assembly may have a greater problem caused by the bending situation.

That is, even though the electrode assemblies are warped or sagged at the same angle, the electrode assembly with a large size may have a relatively greater problem caused by the bending situation than the electrode assembly with a small size.

In addition, even though the electrode assembly is manufactured to be flat by being heated and pressed in order to solve the above-mentioned problem, the large number of stacked electrodes may cause contraction and expansion of the electrode assembly, which causes a limitation. In contrast, in the case of the present invention, because the condition of the bonding force of the separator is satisfied, the secondary battery may not be bent after the activation process.

In the embodiment of the present invention, the negative electrode includes a silicon-based active material. The silicon-based active material may include at least one of a silicon-carbon composite and a silicon oxide. For example, the silicon-based active material may include a silicon carbon composite, a silicon oxide, or both the silicon carbon composite and the silicon oxide. The silicon-based oxide is a material including $SiOx$ (0<x<2). The negative electrode may additionally include a carbon-based active material. Graphite may be used as the carbon-based active material. For example, the negative electrode may include the silicon-based active material of 1 to 40 parts by weight, 2 to 30 parts by weight, 3 to 15 parts by weight, or 4 to 10 parts by weight based on 100 parts by weight of an active material.

In the embodiment of the present invention, the negative electrode may include a negative electrode current collector; and a negative electrode active material layer positioned on at least one surface of the negative electrode current collector and including a negative electrode active material, a binder, and a conductive material. The negative electrode active material layer includes a lower layer region being in surface contact with the negative electrode current collector, and an upper layer region being in surface contact with the lower layer region and extending to a surface of the negative electrode active material layer. At least one of the lower layer region and the upper layer region may include a silicon-based active material. Both the lower and upper layer regions may include a silicon-based active material, as necessary. At least one of the lower and upper layer regions may further include a carbon-based active material.

In this case, the "surface contact" means a shape in which the surfaces adjoin each other.

In the embodiment of the present invention, the separator may include a porous substrate, and an organic/inorganic composite porous coating layer formed on at least one surface of the porous substrate. Because the separator of the electrode assembly according to the present invention needs to have the bonding force with respect to the negative electrode, one surface of the separator may be a surface that adjoins the negative electrode.

In the embodiment of the present invention, the separator may include a porous substrate, and an organic/inorganic composite porous coating layer provided on at least one of one surface and the other surface of the porous substrate. That is, one of the two opposite surfaces of the separator may be a surface that adjoins the negative electrode, and the other surface of the separator may be a surface that adjoins the positive electrode. When the organic/inorganic composite porous coating layers are formed on the two opposite surfaces of the separator, the separator may have bonding forces with respect to the negative and positive electrodes.

In addition, in the embodiment of the present invention, the organic/inorganic composite porous coating layer may include one or more types of particulate binder resins and one or more types of inorganic particles.

Specifically, FIG. 1 schematically illustrates a cross-section of the separator according to the specific embodiment of the present invention. A separator 10 includes a porous substrate 1, and an organic/inorganic composite porous coating layer 2 formed on at least one surface of the porous substrate. FIG. 1 illustrates that the organic/inorganic composite porous coating layer 2 is formed only on one surface of the porous substrate 1. However, the organic/inorganic composite porous coating layer 2 of the separator of the present invention may also be formed on the other side surface of the porous substrate 1. The organic/inorganic composite porous coating layer 2 includes particulate binder resins 4 and 5 and inorganic particles 3. With reference to the following description, the particulate binder polymers 4 and 5 may be a fluorine-based polymer 4 and an acrylic-based polymer 5.

In the embodiment of the present invention, the particulate binder resin may include an acrylic-based polymer and a fluorine-based polymer.

For example, a weight ratio between the acrylic-based polymer and the fluorine-based polymer may be 20:80 to 60:40. The fluorine-based polymer may affect the wet bonding force. A surface of the separator may serve as a bonding layer with respect to the electrode. In case that the acrylic-based polymer is excessively present on the surface of the separator, the wet bonding force may be reduced. For example, in case that the acrylic-based polymer has a particle diameter of 350 to 450 nm and a density of 1.4 to 1.6 and the fluorine-based polymer has a particle diameter of 250 to 400 nm and a density of 1.6 to 1.8, emulsion particle sizes and density differences make it easier for the acrylic-based polymers to move to the surface of the separator during the movement on the surface by migration. Therefore, as described above, the content of the acrylic-based polymer may be adjusted to 60 parts by weight or less. In addition, in case that the acrylic-based polymer is less than 20 parts by weight, the dry bonding force decreases, the bonding force is strongly maintained between the positive electrode and the separator, and the bonding force between the negative electrode and the separator relatively decreases, which may cause a defect caused by bending.

In the embodiment of the present invention, the fluorine-based polymer may be a homopolymer of polyvinylidene fluoride (PVDF), a copolymer of polyvinylidene fluoride with another polymerizable monomer, or a mixture of two or more thereof.

More specifically, examples of another monomer polymerizable with vinylidene fluoride may include, but not limited to, one or more materials selected from a group consisting of tetrafluoroethylene, hexafluoropropylene, trifluoroethylene, chlorofluoroethylene, 1,2 difluoroethylene, perfluoro (methylvinyl) ether, perfluoro (ethylvinyl) ether, perfluoro (propylvinyl) ether, perfluoro (1,3-dioxol), perfluoro (2,2-dimethyl-1,3-dioxol), trichloroethylene, and vinyl fluoride. In particular, the fluorine-based polymer may be a copolymer (PVdF-HFP) of vinylidene fluoride and hexafluoropropylene (HFP). The content of another monomer polymerizable with vinylidene fluoride may be 1 to 20 weight%, particularly 3 to 18 weight% of the copolymer. Another polymerizable monomer serves to increase the wet bonding force. In case that the content of the monomer is less than 1 weight%, the wet bonding force may be hardly generated. In case that the content exceeds 1 weight%, the resistance of the separator is excessively increased, which may degrade the performance of the electrode assembly. For example, the fluorine-based polymer may be a copolymer (PVdF-HFP) of vinylidene fluoride and hexafluoropropylene (HFP). The hexafluoropropylene may account for 3 to 18 parts by weight based on 100 parts by weight of a comonomer that constitutes the copolymer (PVdF-HFP). When the content of HFP is 3 parts by weight or more, the wet bonding force may be at a predetermined level or higher. When the content of HFP is 18 parts by weight or less, the occurrence of bending caused by an excessive bonding force may be prevented. In case that the separator and the electrode have excessive wet bonding forces than necessary, the difference between the dry bonding force and the wet bonding force of the separator with respect to the negative electrode is larger than the difference between the dry bonding force and the wet bonding force of the separator with respect to the positive electrode, which may cause bending. When the bonding force between the separator and the electrode is excessively high, the binder of the separator hinders diffusion and wettability of the electrolyte, which may degrade electrolyte impregnation and increase internal resistance.

In the present invention, the content of comonomers in the PVDF-based polymer may be measured by 1H-NMR using Varian 500 MHz. The detailed measurement method may be obtained from Journal of Materials Chemistry, 2012, 22, 341 or AMT-3412-0k. For example, appropriate equipment such as Bruker Avance III HD 700Mhz NMR or Varian 500 MHz NMR may be used to identify the NMR spectrum.

In the present invention, the acrylic-based polymer may particularly be a (meth)acrylic acid ester-styrene copolymer or an acrylic-styrene copolymer. For example, specific examples of (meth)acrylic acid ester may include (meth)acrylic acid methyl, (meth)acrylic acid ethyl, (meth)acrylic acid n-propyl, (meth)acrylic acid i-propyl, (meth)acrylic acid n-butyl, (meth)acrylic acid i-butyl, (meth)acrylic acid n-amyl, (meth)acrylic acid i-amyl, (meth)acrylic acid hexyl, (meth)acrylic acid cyclohexyl, (meth)acrylic acid 2-ethylhexyl, (meth)acrylic acid n-octyl, (meth)acrylic acid nonyl, (meth)acrylic acid decyl, (meth)acrylic acid hydroxymethyl, (meth)acrylic acid hydroxyethyl, (meth)acrylic acid ethylene glycol, di(meth)acrylic acid ethylene glycol, di(meth)acrylic acid propylene glycol, tri(meth)acrylic acid trimethylolpropane, tetra(meth)acrylic acid pentaerythritol, hexa(meth)acrylic acid dipentaerythritol, (meth)acrylic acid allyl, di(meth)acrylic acid ethylene, and the like, and may be one or more materials selected from a group consisting of the above-mentioned materials. Among the above-mentioned materials, at least one selected from (meth)acrylic acid methyl, (meth)acrylic acid ethyl, (meth)acrylic acid butyl, and (meth)acrylic acid 2-ethylhexyl is preferred, and (meth)acrylic acid butyl is particularly preferred.

More specifically, the acrylic-styrene copolymer may include an acrylic-based binder, and the acrylic-based binder may be a polyacrylate-based binder. For example, the binder may be one or more materials selected from a group consisting of styrene-butadiene rubber, nitrile-butadiene rubber, acrylonitrile-butadiene rubber, acrylonitrile-butadiene-styrene rubber, and acrylate-based polymers, and more particularly, the binder may be a copolymer including acrylate.

For example, the acrylic-based polymer may be a (meth)acrylic acid ester-styrene copolymer, and the styrene may account for 50 to 80 parts by weight based on 100 parts by weight of the comonomer that constitutes the acrylic-based polymer. Styrene has a relatively higher crystalline and Tm (melting temperature) than (meth)acrylic acid ester, e.g., butyl acrylate, which may affect the dry bonding force when styrene is included within a predetermined content range during copolymerization. In case that styrene accounts for less than 50 parts by weight, Tg decreases, and melt-deformation of the acrylic-based polymer occurs during the process of drying the separator, such that the dry bonding force may not be as expected. In case that styrene exceeds 80 parts by weight, the crystalline is high, and styrene becomes relatively less sticky even though the shape of the acrylic-based polymer is maintained.

In the embodiment of the present invention, a glass transition temperature (Tg) of the acrylic-based polymer particle may be 40 to 60°C.

In the embodiment of the present invention, the inorganic particle may have a non-rectangular structure. In case that inorganic particles, which satisfy the structure, are used, the inorganic particles do not hinder the generation of the bonding force of the separator, and the separator has appropriate ventilation. D50 of the inorganic particles may be 0.1 to 1 um. An aspect ratio of the non-rectangular structure may be 1 to 10.

Specifically, in the embodiment of the present invention, the inorganic particle may be $Al_2O_3$.

According to the embodiment, a modulus of the separator measured based on a supply direction (machine direction (MD) of the separator is 4,000 kgf/cm$^2$ or more and less than 10,000 kgf/cm$^2$ or 5,000 kgf/cm$^2$ or more and less than 8,000 kgf/cm$^2$. A coefficient of kinetic friction of the separator is more than 0.1 and 0.35 or less, 0.15 to 0.33, or 0.2 to 0.3. FIG. 5 is a view schematically illustrating the separator according to the present invention. A direction perpendicular to a short side w of the separator 14, i.e., a length of a long side of the separator 14 corresponds to the supply direction MD of the separator 14. In this case, the separator may have the modulus and the coefficient of kinetic friction. The modulus and the coefficient of kinetic friction may not only affect the wet or dry bonding force with respect to the positive electrode or the negative electrode but also reduce the occurrence of creases on the separator or a misalignment defect during the process of stacking the electrode assemblies. The reduction in the above-mentioned problems is further required when the size of the electrode assembly increases, like the high-capacity electrode assembly. Therefore, it is possible to provide the electrode assembly with the uniform and excellent performance by preventing the high-capacity electrode assembly from being creased and maintaining the alignment of the high-capacity electrode assembly. A length of the short side of the separator may be 500 mm or more, particularly 600 mm or more. The length of the short side of the separator may be a length of the long side based on the electrode assembly. That is, the length of the short side of the separator means a length in a direction perpendicular to the supply direction of the separator.

In the present specification, the length of the short side of the porous substrate is equal to the length of the short side of the separator, and the length of the short side of the separator means a side perpendicular to the supply direction (machine direction (MD)) of the separator. As described below, the short side may be expressed as a width.

The modulus of the separator may be a value measured in the supply direction (machine direction (MD)) of the separator.

In the embodiment of the present invention, the magnitude of the modulus of the separator measured in the supply direction (machine direction (MD)) of the separator may be 4,000 to 30,000 kgf/cm$^2$, particularly 5,000 to 30,000 kgf/cm$^2$, and more particularly 5,500 to 28,000 kgf/cm$^2$.

In the present specification, regarding the modulus of the separator, a separator specimen having a width of 15 mm and a length of 15 cm was prepared, and a tensile test was performed on the separator specimen by using a universal testing machine (UTM). More specifically, the test was performed by setting a speed condition of the universal testing machine to 50 mm/min. The modulus was measured by using a load applied when the separator specimen is deformed by 2% in a longitudinal direction. That is, in this case, the longitudinal direction means the direction MD of the separator, and the width means the length of the short side of the separator.

In the embodiment of the present invention, a coefficient of kinetic friction of the separator may be more than 0.1 and 0.35 or less, e.g., 0.2 or more and 0.3 or less.

In the present specification, the coefficient of kinetic friction of the separator may be measured on the separator specimen by using a 14FW friction/abrasion measurer of Heidon. In this case, the friction/abrasion measurer used a diamond pin with 0.1 mm R, and the coefficient of kinetic friction was measured on the separator under a condition of a weight of 5g at 50 mm/min.

As described above, in case that the magnitude of the modulus and the coefficient of kinetic friction of the separator satisfy the condition and range, the electrode assembly with the excellent performance may be manufactured by using the separator. Specifically, it is possible to prevent the occurrence of creases on the separator or the misalignment defect when the separators are supplied during the process of stacking the separators while supplying the separators onto a stack table. Therefore, it is possible to manufacture the electrode assembly with the uniform and excellent performance.

In the embodiment of the present invention, a thickness of the organic/inorganic composite porous coating layer may be 2 to 5 μm. In case that the thickness range of the coating layer is satisfied, it is possible to easily ensure the modulus and coefficient of kinetic friction of the separator according to the present invention.

In the embodiment of the present invention, the porosity of the porous substrate may be 20 to 60%, particularly 25 to 55%.

In the embodiment of the present invention, a pore size of the porous substrate may be 20 to 25 nm.

In the embodiment of the present invention, the compressibility of the porous substrate may be less than 10%, particularly less than 8%.

In the embodiment of the present invention, the compressibility was measured by heating and pressing the porous substrate at a temperature of 70°C and a pressure of 4 MPa for one second and calculating a change in thicknesses between after the heating and pressing. That is, the calculation was performed on the basis of Equation 1 below.

Compressibility (%) = [(Porous substrate thickness before heating and pressing - Porous substrate thickness after heating and pressing)/Porous substrate thickness before heating and pressing] X 100 (%) [Equation 1]

In case that the compressibility range is satisfied, the magnitude of the modulus according to the present invention may be obtained. The compressibility may also be referred to as a thickness deformation rate.

**<Secondary Battery>**

The embodiment of the present invention provides the secondary battery that satisfies Expression 1 below.

$$[\text{Expression 1}]$$

$$X < 5 \ \text{mm}$$

In Expression 1,

X represents a maximum distance measured from an imaginary reference line, which connects two opposite sides of an upper surface of the secondary battery, to a lowest point of the upper surface of the secondary battery in a state in which the secondary battery is placed on a flat surface so that a concave surface of the secondary battery is directed upward after the activation process of the secondary battery. In this case, in case that the opposite surfaces of the secondary battery have the same degree of concaveness, the measurement is performed in a state in which any one surface of the secondary battery is directed upward.

The configuration in which Expression 1 is satisfied means that the secondary battery is not bent after the activation of the secondary battery. That is, as illustrated in FIG. 4, one surface of the secondary battery has a partially concave shape after the activation process of the secondary battery. In this case, as illustrated in FIG. 4, the maximum distance is measured from the imaginary reference line, which connects two opposite sides of the upper surface of the secondary battery, to the lowest point of the upper surface of the secondary battery in the state in which the secondary battery is placed on the flat surface so that the concave surface of the secondary battery is directed upward.

Specifically, one flat ruler (hereinafter, referred to as a ruler a) is placed on two opposite sides of the upper surface of the secondary battery, and the maximum distance to the lowest point of the upper surface of the secondary battery is measured by using a separate flat ruler (hereinafter, referred to as a ruler b). In this case, when the maximum distance measured from one surface of the ruler a to the lowest point of the upper surface of the secondary battery by using the ruler b is less than 5 mm, it is determined that no bending occurs. According to the determination, FIG. 4(a) illustrates a case in which bending occurs, and FIG. 4(b) illustrates a case in which no bending occurs.

In the embodiment of the present invention, the electrode assembly may not be bent after the activation process. The electrode assembly, which is taken out of the opened battery casing, may not be bent after the activation process.

**<Secondary Battery Manufacturing Method>**

The embodiment of the present invention provides a secondary battery manufacturing method that includes a step of activating the secondary battery and satisfies Expression 1. Therefore, the secondary battery manufacturing method of the present invention may provide the secondary battery that is not bent after the activation step.

The secondary battery manufacturing method according to the embodiment includes a step of loading the electrode assembly according to the embodiment into the battery casing, a step of sealing the battery casing, a step of injecting the electrolyte into the battery casing, and a step of activating the secondary battery.

In the embodiment of the present invention, the secondary battery manufacturing method may further include a step of laminating the positive electrode, the negative electrode, and the separator prior to the step of loading the electrode assembly into the battery casing. For example, the lamination may be performed by a step of heating and pressing the secondary battery. The step of heating and pressing the secondary battery of the secondary battery manufacturing method may be performed under a condition of a temperature of 30 to 90°C, a pressure of 2 to 5 MPa, and a time of 15 to 30 seconds on the positive electrode, the negative electrode, and the separator prior to the step of loading the electrode assembly into the battery casing. The step of heating and pressing the secondary battery is performed prior to the step of activating the secondary battery and means a step different from the heating and pressing processes during the process of manufacturing the electrode assembly by stacking the electrode and the separator. The lamination step may be performed without a jig (free-jig formation). The lamination step under the above-mentioned condition may affect the wet or dry bonding force between the separator and the positive or negative electrode. In case that the lamination condition cannot reach the range, it is difficult to obtain a desired dry bonding force and perform the assembling process in the next step. In addition, in case that the lamination condition exceeds the range, the bonding force may become excellent, but it is difficult to adjust wetting of the electrolyte, and a balance of the bonding force of the separator with respect to the positive and negative electrodes increases, which may further degrade the bending.

In the embodiment of the present invention, the step of activating the secondary battery may include degassing after charging the secondary battery one or more times, e.g., two or three times under a condition of a temperature of 25 to 60°C, a pressure of 0.1 to 0.9 Mpa, a current of 0.2 to 0.8 C, e.g., 0.3 to 0.7 C, 0.4 to 0.6 C or 0.5C, and a state of charge (SOC) of 30 to 60%. The condition of the activation step may also affect the wet or dry bonding force between the separator and the positive or negative electrode. In case that the temperature is excessively high in the activation step, the balance of the bonding force of the positive and negative electrodes is broken, such that the bending may be accelerated, a desired SEI film cannot be formed when the state of charge (SOC) is less than 30%, and the bending may be caused by the expansion and contraction in volume of the negative electrode when the state of charge (SOC) is more than 60%. In order to satisfy the above-mentioned pressure condition, the activation step may be performed in a state in which the secondary battery is pressed by the jig. Because the activation is performed in the state in which the secondary battery is pressed by the jig, the bending may be minimized even without the jig under the charging/discharging condition after the activation step. However, in case that the pressure is excessive, there may occur a problem in that lithium precipitation occurs because of binder resistance caused by great bonding.

In the embodiment of the present invention, the secondary battery manufacturing method may further include a step of manufacturing the electrode assembly prior to the step of loading the electrode assembly into the battery casing. The step of manufacturing the electrode assembly may include a positive electrode supply step of supplying the positive electrode onto the stack table, a negative electrode supply step of supplying the negative electrode onto the stack table, a separator supply step of supplying the separator onto the stack table, a stacking step of stacking a stack, which includes the positive electrode, the separator, and the negative electrode, on the stack table, and a heat press step of heating and pressing the stack.

According to the embodiment, the separator supply step may supply the separator while pressing the supplied separator with pressure of 0.1 kgf/cm$^2$ or less.

In the embodiment of the present invention, the heat press step includes a lower plate configured to apply heat and configured such that the electrode assembly to be heated and pressed is placed on the lower plate, and an upper plate corresponding to the lower plate and configured to apply heat. The lower and upper plates may be a pair of pressing blocks.

In the embodiment of the present invention, the stacking step may include a step of supplying the positive electrode onto the stack table, a step of supplying the negative electrode onto the stack table, and a step of supplying the separator onto the stack table.

That is, the stacking step may further include a step of supplying the positive electrode onto the stack table, and a step of supplying the negative electrode onto the stack table.

In the embodiment of the present invention, the step of supplying the separator onto the stack table may include a step of unwinding the separator wound around a separator roll, and a step of pressing the separator with pressure of 0.1 kgf/cm$^2$ or less. The separator may be pressed by a separator dancer part to be described below.

The electrode assembly manufacturing method according to the embodiment of the present invention may include a step of transferring the stack to the heat press step after the stacking step. In the step of transferring the stack, a gripper may grip the stack to transfer the stack.

In the embodiment of the present invention, the gripper may keep gripping the stack in the heat press step. This may be referred to as a first heat press step.

In the embodiment of the present invention, the gripper may stop the operation of gripping the stack in the heat press step. This may be referred to as a second heat press step.

In addition, in the embodiment of the present invention, the heat press step may stop the operation of gripping the stack, and the heat press step may be performed only once.

In the embodiment of the present invention, the step of manufacturing the stack in which the positive and negative electrodes are alternately disposed between the folded separators may use a technology typically used in the corresponding step. For example, the step of manufacturing the stack may be a step of repeating the processes of stacking the positive electrode on the stack table, covering the positive electrode with the separator, stacking the negative electrode on the upper surface of the separator, covering the negative electrode by folding the separator, and stacking the positive electrode on the upper surface of the separator. In the present embodiment, this step will be referred to as a zigzag stacking method. In this case, the process of moving the separator while covering the positive or negative electrode placed on the separator may adopt a method of moving the stack table leftward and rightward, a method of moving the separator leftward and rightward, and a method of rotating the stack table.

In the zigzag stacking method, the alignment of the stack may be maintained during the process in which the holding device grips the stack and stacks the positive electrode, the negative electrode, and the separator.

In the present specification, the "holding device" is a mechanism configured to grip the stack placed on the stack table in order to stack the positive or negative electrode in the zigzag stacking method, and the holding device is different from the gripper configured to grip the stack in the heat press step.

In the embodiment of the present invention, the separator may be supplied in the form of a separator sheet. That is, the separator, which is additionally supplied, may be continuously supplied. In addition, the "upper surface" may mean a surface opposite to the surface of the separator or electrode placed on the stack table.

In the embodiment of the present invention, the heat press step may heat the stack while pressing the stack in the direction of the stacking axis. In addition, the heat press step may be performed by the heat press part to be described below.

In addition, in the embodiment of the present invention, the heat press step may include a step of moving the stack between the pair of pressing blocks including press heaters, a step of surface-pressing the stack by moving the pair of pressing blocks in the direction of the stacking axis, and a step of heating the stack.

The pair of pressing blocks may be the lower plate, and the upper plate that faces the lower plate.

In addition, in the embodiment of the present invention, the heat press step may include a step of moving the stack between the pair of pressing blocks, a step of surface-pressing the stack by moving the pair of pressing blocks in the direction of the stacking axis, and a step of heating the stack by using the press heater provided separately.

That is, the press heater may be included in the pressing block or provided as a separate component.

As described above, the electrode assembly manufacturing method according to the embodiment of the present invention may further include a release step of releasing the gripper before the heat press step. The step of releasing the gripper may include a step of stopping the operation of pressing the upper surface of the stack by the gripper, and a step of spacing the gripper from the stack.

In addition, the step of moving the stack between the pair of pressing blocks including the press heaters in the heat press step may include not only a step of moving the stack but also a step of moving the stack together with the stack table in a state in which the stack is placed on the stack table. In this case, the objects to be heated and pressed by the pair of pressing blocks and the press heaters may mean the stack and the stack table.

In the embodiment of the present invention, the heat press step may heat and press the stack for 15 to 30 seconds under a temperature condition of 30 to 90°C and a pressure condition of 2 to 5 MPa. More particularly, the heat press step may heat and press the stack for 15 to 30 seconds under a temperature condition of 60 to 90°C and a pressure condition of 2.5 to 4.5 MPa. More particularly, the heat press step may heat and press the stack for 15 to 25 seconds under a temperature condition of 65 to 85°C and a pressure condition of 3 to 4 MPa.

During the heating and pressing processes that satisfy the condition, it is possible to improve the bonding force between the positive electrode and the separator and between the separator and the negative electrode without damaging the positive electrode, the separator, and the negative electrode. As a result, the performance of the electrode assembly may be improved.

For reference, a semi-finished product state, in which the positive electrode, the separator, and the negative electrode are repeatedly stacked, may be expressed as the stack, and the process of winding the separator may be performed on the semi-finished product, such that one distinctive component may be defined as the electrode assembly.

In addition, the embodiment of the present invention may provide an electrode assembly manufacturing apparatus to which the electrode assembly manufacturing method may be applied.

Specifically, the electrode assembly manufacturing apparatus according to the present invention may include a separator supply part configured to supply the separator onto the stack table, a positive electrode supply part configured to supply the positive electrode onto the stack table, and a negative electrode supply part configured to supply the negative electrode onto the stack table.

In the embodiment of the present invention, the heat press part includes the pair of pressing blocks, and the pair of pressing blocks surface-presses the stack while moving in the direction in which the pair of pressing blocks faces each other.

The heat press part includes the pair of pressing blocks, and the press heaters configured to heat the pressing blocks. The press heaters heat the pressing blocks, and the pair of pressing blocks moves in the direction in which the pair of pressing blocks face each other, thereby surface-pressing the stack placed between the pressing blocks.

In this case, the pair of pressing blocks may include the press heaters therein.

In another embodiment of the present invention, the heat press part may include two heat press parts separated from each other. That is, the heat press part may include a first heat press part and a second heat press part.

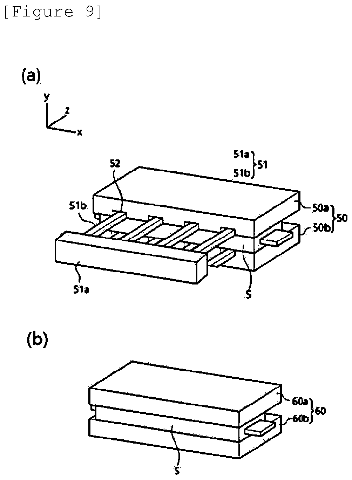

With reference to FIG. 9, the first heat press part may include a pair of first pressing blocks. Pressing surfaces of the pair of first pressing blocks may include grooves corresponding in shape to the gripper so that the pair of first pressing blocks may press the stack in the state in which the gripper grips the stack. A portion of the pressing surface, which excludes the groove, may be a flat surface. The second heat press part may include a pair of second pressing blocks. Pressing surfaces of the pair of second pressing blocks may be configured as flat surfaces. That is, when the stack is placed on the pressing surfaces of the pressing blocks, the second pressing blocks may heat and press the stack while moving toward each other.

As described above, when the heat press part is divided into two parts, the heat press part is cooled while the heated stack is transferred, such that it is possible to prevent a loss of a bonding force between layers in the stack.

The condition in which the heat press part heats and presses the stack is identical to the above-mentioned condition of the heat press step.

In addition, the electrode assembly manufacturing apparatus according to the present invention may include the gripper configured to grip the stack during the process of transferring the stack from the stack table to the heat press part. The gripper may grip or release the stack in the above-mentioned manner.

In the present specification, the term "part" means an interface that performs a particular function in the apparatus for manufacturing an electrode assembly.

In the embodiment of the present invention, the stack table may include a table body on which the stack is placed, and a drive part configured to operate the table body. The table body may include a stack table heater capable of heating the stack to a predetermined temperature when the stack is placed on the table body.

In the embodiment of the present invention, the positive electrode supply part may include at least one of a positive electrode seating table, a positive electrode roll, a first cutter, a first conveyor belt, and a positive electrode supply head.

Further, the positive electrode seating table may include a positive electrode heater configured to heat the positive electrode, which is placed on the positive electrode seating table, to a predetermined temperature.

In the embodiment of the present invention, the negative electrode supply part may include at least one of a negative electrode seating table, a negative electrode roll, a second cutter, a second conveyor belt, and a negative electrode supply head.

Further, the negative electrode seating table may include a negative electrode heater configured to heat the negative electrode, which is placed on the negative electrode seating table, to a predetermined temperature.

In the embodiment of the present invention, a positive electrode stacking part may include a first suction head configured to hold the positive electrode, which is seated on the positive electrode seating table, by vacuum suction. The positive electrode stacking part may move the positive electrode from the positive electrode seating table to the stack table.

The negative electrode stacking part may include a second suction head configured to hold the negative electrode, which is seated on the negative electrode seating table, by vacuum suction. The negative electrode stacking part may move the negative electrode from the negative electrode seating table to the stack table.

In the embodiment of the present invention, the current collector, the active material, the conductive material, and the like used for the positive and negative electrodes may be used without limitation as long as the current collector, the active material, the conductive material, and the like are those publicly-known in the art. Further, a method publicly-known in the art may be used as the method of manufacturing the positive and negative electrodes without limitation.

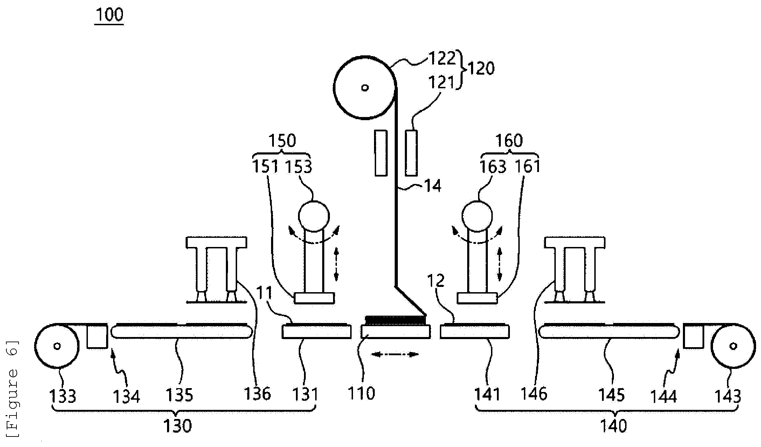

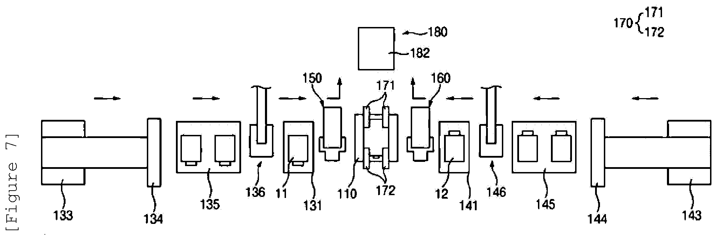

FIG. 6 is a cross-sectional view illustrating a process flow of the electrode assembly manufacturing apparatus according to the embodiment of the present invention, and FIG. 7 is a plan view illustrating the process flow of the electrode assembly manufacturing apparatus according to the embodiment of the present invention. In this case, for convenience, a holding device 170, a heat press part 180, and an induction heating part 190 illustrated in FIG. 7 are omitted from FIG. 6, and a separator supply part 120 illustrated in FIG. 6 is omitted from FIG. 7.

With reference to FIGS. 6 to 8, an electrode assembly manufacturing apparatus 100 according to an embodiment of the present invention includes the separator supply part 120 configured to supply the separator 14 onto a stack table 110, a positive electrode supply part 130 configured to supply a positive electrode 11 onto the stack table 110, and a negative electrode supply part 140 configured to supply a negative electrode 12 onto the stack table 110. In this case, the separator 14, the positive electrode 11, and the negative electrode 12 may be supplied onto the stack table 110 while being heated by the positive electrode supply part 130 and the negative electrode supply part 140.

In addition, the electrode assembly manufacturing apparatus 100 according to the embodiment of the present invention includes a positive electrode stacking part 150 configured to stack the positive electrode 11, which is supplied by the positive electrode supply part 130, on the stack table 110, and a negative electrode stacking part 160 configured to stack the negative electrode 12, which is supplied by the negative electrode supply part 140, on the stack table 110. In this case, the separators 14, which are supplied by the separator supply part 120, are stacked in a zigzag manner while alternately reciprocating to the left side of the stacking axis and the right side of the stacking axis based on the stacking axis. In this case, any one of the positive and negative electrodes 11 and 12 is alternately inserted into the space (between the separators) defined when the separator 14 is folded. As a result, the stack, in which the positive electrode 11, the separator 14, the negative electrode 12, and the separator 14 are repeatedly stacked, is placed on the stack table 110.

The separator supply part 120 may include a separator heating part 121 and a separator roll 122. The separator heating part 121 may be selectively applied.

More specifically, the positive electrode supply part 130 may include a positive electrode seating table 131, a positive electrode heater 132, a positive electrode roll 133, a first cutter 134, a first conveyor belt 135, and a positive electrode supply head 136. The positive electrode heater 132 may be selectively applied.

In addition, the negative electrode supply part 140 may include a negative electrode seating table 141, a negative electrode heater 142, a negative electrode roll 143, a second cutter 144, a second conveyor belt 145, and a negative electrode supply head 146. The negative electrode heater 142 may be selectively applied.

The positive electrode stacking part 150 stacks the positive electrode 11 on the stack table 110. In this case, the positive electrode stacking part 150 may include a first suction head 151, a first head heater (not illustrated), and a first movement part 153. In addition, the negative electrode stacking part 160 stacks the negative electrode 12 on the stack table 110. The negative electrode stacking part 160 may include a second suction head 161, a second head heater (not illustrated), and a second movement part 163.

In some instances, the positive electrode stacking part 150 and the negative electrode stacking part 160 may further include heaters (not illustrated) configured to preheat the positive electrode and the negative electrode.

In addition, the electrode assembly manufacturing apparatus 100 according to the embodiment of the present invention may further include the holding device 170 configured to fix the positive electrode 11 and the negative electrode 12 when the positive electrode 11 and the negative electrode 12 are stacked on the stack table 110. Additionally, the electrode assembly manufacturing apparatus 100 according to the embodiment of the present invention includes the heat press part 180 configured to bond the positive electrode 11, the separator 14, and the negative electrode 12 by heating and pressing the stack placed on the stack table 110.

In addition, the electrode assembly manufacturing apparatus 100 according to the embodiment of the present invention further includes the induction heating part 190 configured to transfer heat to the electrode in the stack by heating the stack by induction heating. In addition, the electrode assembly manufacturing apparatus may further include a controller (not illustrated) configured to control whether to operate the induction heating part 190. Therefore, an electrode assembly 10 illustrated in FIG. 7 may be finally manufactured.

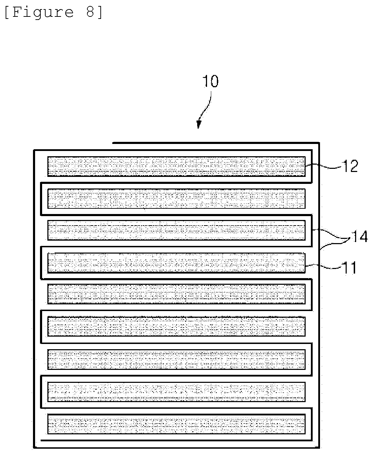

FIG. 8 is a cross-sectional view exemplarily illustrating an electrode assembly manufactured by the electrode assembly manufacturing apparatus and the electrode assembly manufacturing method according to the embodiment of the present invention.

With reference to FIG. 8, the electrode assembly 10 may be provided in the form in which the separators, which are stacked while being folded in a zigzag manner, and the positive or negative electrodes, which are inserted into the spaces between the separators, are alternately inserted and stacked.

In this case, the separator 14 may surround an outermost periphery of the stack of the electrode assembly 10. However, the configuration of the electrode assembly 10 is not limited to the example illustrated in FIG. 8.

FIG. 9 illustrates a configuration of a heat press 50, particularly a case in which a heat press part 50 includes the first heat press part 50 and the second heat press part 60.

FIG. 9(a) is a perspective view illustrating the first heat press part 50, and FIG. 9(b) is a perspective view illustrating the second heat press part 60.

With reference to FIG. 9(a), the first heat press part 50 may heat and press a stack S in a state in which the stack S is fixed by a gripper 51. The first heat press part 50 may include a pair of first pressing blocks 50a and 50b. All the pressing surfaces of the pair of first pressing blocks 50a and 50b may be provided as flat surfaces, except for grooves corresponding to fixing parts 51b of the gripper 51.

The gripper 51 may include: a main body 51a provided to correspond to a length x and a height y of the stack S or larger than the length x and the height y of the stack S, and the fixing parts 51b protruding from the main body 51a and configured to hold the stack S. In this case, the length x of the stack S may mean a longest distance between one end and the other end of the stack S. The height y may mean a distance in a stacking direction of the stack S. A width z may mean a distance traversing the upper surface of the stack S.

The position of the fixing part 51b may be adjusted in the height direction of the main body 51a. The fixing part 51b may fix the stack S by coming into contact with the upper and lower surfaces of the stack S.

Thereafter, the pair of first pressing blocks 50a and 50b heats and presses the stack S while moving in a direction in which the pair of first pressing blocks 50a and 50b faces each other. The electrodes and the separators in the electrode assembly are stably joined by being heated and pressed.

The first heat press part 50 may be configured to compensate for a configuration in which the electrode assembly induction-heated is cooled while moving, and the first heat press part 50 may be selectively provided. That is, in some instances, the first heat press part may be omitted.

With reference to FIG. 9(b), the second heat press part 60 may finally heat and press the stack S primarily heated and pressed by the first heat press part 50. The second heat press part 60 may include a pair of second pressing blocks 60a and 60b, and a pair of pressing blocks 61 and 62 may press surfaces of the stack S while moving in a direction in which the pair of pressing blocks 61 and 62 faces each other. In addition, all the pressing surfaces of the pair of second pressing blocks 60a and 60b included in the second heat press part 60, which come into contact with and press the stack S, may be provided as flat surfaces.

[Mode for Invention]

While the embodiments of the present invention have been described above, the scope of the present invention is not limited to, and it will be obvious to those skilled in the art to which the present invention pertains that various modifications and alterations may be made without departing from the technical spirit of the present invention.

Physical properties and performances of separators, electrode assemblies, and secondary batteries, which were manufactured according to the following examples and comparative examples, were measured as follows.

**<Experimental Example 1>- Measurement of Dry Bonding Force**

The dry bonding force with respect to the negative electrode of the electrode assembly and the dry bonding force with respect to the positive electrode were measured by preparing a specimen in the form of a stack made by stacking a positive electrode, a separator, and a negative electrode and cutting a part of the electrode assembly into a size of 20 mm X 70 mm, and peeling the separator off the specimen at a rate of 100 mm/min from one side of the separator in a 90° peeling mode by using a tensile tester (UTM equipment) before the electrode assembly was impregnated with an electrolyte. The result is shown in Tables 1 to 3 below.

**<Experimental Example 2>- Measurement of Wet Bonding Force**

A specimen in the form of a stack made by stacking a positive electrode, a separator, and a negative electrode was prepared by taking an electrode assembly out of a pouch exterior material of a secondary battery after the activation process and cutting a part of the electrode assembly (impregnated with the electrolyte) into a size of 20 mm X 70 mm. After the preparation of the specimen, the wet bonding force of the electrode assembly was measured by peeling the separator off the specimen from one side of the separator at a rate of 100 mm/min in a 90° peeling mode by using a tensile tester (UTM equipment). The result is shown in Tables 1 to 3 below. That is, the methods of measuring the dry bonding force and the wet bonding force were identical to each other, except that the electrode assembly was impregnated with the electrolyte, as described above.

**<Experimental Example 3>- Measurement of Separator Surface Composition**

The electrode assembly was taken out of the pouch exterior material of the secondary battery after the activation process, the electrode assembly was impregnated with a dimethyl carbonate solvent for 30 minutes in order to remove electrolyte additives or metal salt components remaining on the surface of the separator, the separator was dried for 24 hours under a room temperature condition, and the surface of the separator was observed and the surface composition was measured on the basis of the above-mentioned method. The result is shown in Tables 1 to 3 below.

**<Experimental Example 4>- Measurement of Bending Level**

After the activation process, the secondary battery including the electrode assembly was placed on a flat surface so that the concave surface of the secondary battery is directed upward. Next, one flat ruler (hereinafter, referred to as a ruler a) was placed to correspond to an imaginary reference line connecting two opposite sides of the upper surface of the secondary battery, and the maximum distance to the lowest point of the upper surface of the secondary battery was measured by using a separate flat ruler (hereinafter, referred to as a ruler b). The result is shown in Tables 1 to 3 below. For reference, in case that the measured distance is less than 5 mm at most, it is determined that no bending occurs.

**<Experimental Example 5>- Separator Resistance after Activation**

The electrode assembly was taken out of the pouch exterior material of the secondary battery after the activation process, the electrode assembly was impregnated with a dimethyl carbonate solvent for 30 minutes in order to remove electrolyte additives or metal salt components remaining on the surface of the separator, the separator was dried for 24 hours under a room temperature condition, and resistance properties of the separator were identified.

Specifically, the separator was cut and placed on a 2032 coin cell of Hoshen, and the resistance value at the time of impregnating the separator with the electrolyte was measured by an alternating current method at 25°C with electrochemical impedance spectroscopy (EIS) by using a 1M $LiPF_6$-ethylene carbonate/ethyl methyl carbonate (weight ratio 3:7) electrolyte. The result is shown in Tables 1 to 3 below.

**<Experimental Example 6>- Measurement of Modulus and Coefficient of Kinetic Friction of Separator**

The modulus of the separator was measured. Specifically, the separator specimen having a width of 15 mm and a length of 15 cm in the direction MD of the separator was prepared, and the tensile test was performed on the separator specimen by using the universal testing machine (UTM). More specifically, the test was performed by setting a speed condition of the universal testing machine to 50 mm/min. The modulus was measured by using a load applied when the separator specimen is deformed by 2% in a longitudinal direction.

In addition, the separator specimen having a width of 5 cm and a length of 5 cm in the direction MD of the separator was prepared, and the separator specimen was measured by using the 14FW friction/abrasion measurer of Heidon. In this case, the friction/abrasion measurer used a diamond pin with 0.1 mm R, and the coefficient of kinetic friction was measured on the separator under a condition of a weight of 5g at 50 mm/min.

**<Experimental Example 7>- Evaluation of Contraction Ratio**

The contraction ratio of the separator was measured and evaluated. Specifically, the thermal contraction ratio of the separator was measured at 130°C, and when any one of the directions MD and TD had the thermal contraction ratio of more than 5%, it was determined that a defect and deterioration occurred.

**<Experimental Example 8>- Evaluation of Assembling Process Performance**

Whether the separator of the electrode assembly was creased and the degree to which the stack was warped (misaligned) were evaluated. Specifically, whether the separator of the electrode assembly was creased was visually observed by disassembling the electrode assembly. When any one crease was observed, it was determined that a defect occurred. In addition, the evaluation of the misalignment of the electrode assembly was performed by visually observing an end of the separator positioned on an electrode tab of the electrode assembly. When the end of the separator was misaligned by 1 mm or more, it was evaluated that a defect occurred.

Example 1

<Electrode Assembly Manufacturing>

In order to prepare the negative electrode, slurry for the first active material layer was prepared by mixing a mixture made by mixing artificial graphite as a carbon-based active material, styrene-butadiene rubber (SBR) and carboxymethyl cellulose (CMC) as binder polymers, and carbon black as a conductive material at a weight ratio of 95.5:3:1.5 using water as a dispersion medium, wherein the mixture and the dispersion medium were at a weight ratio of 1:2.

A silicon oxide with a coulombic efficiency of 80% or more when charged or discharged at 0.1C was prepared as a silicon-based active material. The slurry for the second active material layer, which was identical to the first active material layer, except that the carbon-based active material (artificial graphite) and the silicon-based active material were mixed at a weight ratio 9:1 and carbon nanotubes were added as a conductive material, was prepared. That is, a weight ratio between the active material, the binder polymer, the carbon black, and the carbon nanotube (CNT) was 95.5:3:1.0:0.5, and a weight ratio between the carbon-based active material and the silicon-based active material of the active material was 9:1.

A specific surface area of the carbon nanotube (CNT) was 550 $m^2$/g. The carbon nanotubes (CNT) were multi-walled carbon nanotubes.

One surface of a copper (Cu) thin film, which was a negative electrode current collector with a thickness of 10 $\mu$m, was coated with the slurry for the first active material layer by using a double slot die. Next, the slurry for the first active material layer was coated with the slurry for the second active material layer, and the slurry was dried for one hour under a vacuum at 130°C, such that the first active material layer and the second active material layer were formed.

The negative electrode was manufactured by simultaneously rolling the first and second active material layers, which were formed as described above, by a roll-pressing method. In this case, the thickness ratio between the first and second active material layers was 1:1. The loading amount based on the dry weights of the first and second negative electrode active material layers was 512 mg/25 $cm^2$ (overall thickness of negative electrode: 292 um on a dry basis).

Next, in order to manufacture the positive electrode, the positive electrode active material slurry was prepared by adding Li(Ni$_{0.3}$Mn$_{0.5}$Co$_{0.2}$)O$_2$(NCM-352) as a positive electrode active material, carbon black as a conductive material, and polyvinylidene fluoride (PVdF) as a binder, at a weight ratio of 96:2:2, into N-methyl pyrrolidone (NMP) as a solvent. The positive electrode was prepared by coating one surface of the aluminum current collector having a thickness of 15 um with the slurry and drying and rolling the positive electrode under the same condition as the negative electrode. In this case, the loading amount based on the dry weight of the positive electrode active material layer was 988 mg/cm2 (overall thickness of positive electrode: 242 um on a dry basis).

Lastly, in order to manufacture the separator, a polyethylene film (PE, thickness of 9 pm), i.e., a porous substrate was prepared. The porous substrate was stretched in the direction MD at 100°C by 8 times and stretched in the direction TD at 125°C by 8 times. The compressibility obtained by heating and pressing the porous substrate at a temperature of 70°C and a pressure of 4 MPa for one second and then calculating a change in thicknesses between the heating and pressing was 5%.

Thereafter, the first and second binders were added as particulate binders to distilled water at room temperature at a weight ratio of 60:40. Next, a dispersant was added to the distilled water together with inorganic particles (weight ratio of first and second binders to inorganic particles = 20:80) at a ratio of 4 times a total weight of the first and second binders. In this case, as a copolymer of styrene and butylacrylate, a binder having a glass transition temperature (Tg) of 45°C by adjusting the weight ratio of the two monomers (styrene and butylacrylate) to 70:30, was used as the first binder, and a PVDF-HFP binder having a content of HFP-derived repeat units of 5 wt% was used as the second binder.

In addition, $Al_2O_3$ was used as the inorganic particles. An aspect ratio of the inorganic particle was 1 to 10, and D50 was 0.5 um.

Thereafter, an inorganic material dispersion liquid was manufactured by loading 0.7 um zirconia beads to the distilled water in amount equal to the amount of the inorganic particles and then performing bead milling for 2 hours by using a paint shaker.

Next, slurry, in which binders and inorganic particles were dispersed, was manufactured by additionally loading a surfactant to the inorganic material dispersion liquid and then stirring the inorganic material dispersion liquid for 10 minutes at 10 rpm.

Thereafter, two opposite surfaces of the polyethylene film (PE, thickness of 9 $\mu$m) were coated with the slurry by using a doctor blade, and the porous coating layer with a coating thickness of 2.5 um was formed by drying the polyethylene film by using a hot-air blower, such that the separator of Example 1 having the overall thickness of 14 um was manufactured. The manufactured separator had a modulus of 6,000 (kgf/cm2) and a coefficient of kinetic friction of 0.25.

The positive electrode, the negative electrode, and the separator were stacked while the manufactured positive electrode, negative electrode, and separator were supplied onto the stack table and the separator was folded. Specifically, the stack using thirty-nine sheets of electrodes was manufactured by stacking the positive electrodes, the separators, and negative electrodes on the stack table in the shape in which the positive electrodes and the negative electrodes are alternately disposed between the folded separators. Thereafter, the electrode assembly of Example 1 was manufactured by heating and pressing the stack under a temperature condition of 60°C and a pressure condition of 3 MPa for 15 seconds (time condition).

**<Secondary Battery Manufacturing>**

The secondary battery was completely assembled by loading the electrode assembly of Example 1 into the pouch exterior material (battery casing) having a laminated sheet made of CPP/aluminum/nylon, injecting an ethyl methyl carbonate electrolyte including LiPF6, and thermally bonding the pouch exterior material.

Thereafter, the activation process of the secondary battery was performed by charging the secondary battery with 0.5C to the SOC of 50% under a temperature condition of 50°C and a pressure condition of 0.5 MPa.

**Example 2**

Example 2 was carried out in the same way as Example 1, except that the first and second binders were loaded as particulate binders at a weight ratio of 50:50 during the process of manufacturing the separator.

**Comparative Example 1**

Comparative Example 1 was carried out in the same way as Example 1, except that the first and second binders were loaded as particulate binders at a weight ratio of 15:85 during the process of manufacturing the separator.

**Comparative Example 2**

Comparative Example 2 was carried out in the same way as Example 1, except that the first and second binders were loaded as particulate binders at a weight ratio of 70:30 during the process of manufacturing the separator.

**Comparative Example 3**

Comparative Example 3 was carried out in the same way as Example 2, except that the binder, in which a weight ratio between the two monomers (styrene and butyl acrylate) was adjusted to 25:75, was used as the copolymer of styrene and butyl acrylate, i.e., the first binder during the process of manufacturing the separator.

**Comparative Example 4**

Comparative Example 4 was carried out in the same way as Example 2, except that the binder, in which a weight ratio between the two monomers (styrene and butyl acrylate) was adjusted to 85:10, was used as the copolymer of styrene and butyl acrylate, i.e., the first binder during the process of manufacturing the separator.

**Comparative Example 5**

Comparative Example 5 was carried out in the same way as Example 2, except that the PVDF-HFP binder, in which the content of HFP-derived repeat units was 1.5 weight%, was used as the second binder during the process of manufacturing the separator.

**Example 3**

Example 3 was carried out in the same way as Example 2, except that the PVDF-HFP binder, in which the content of HFP-derived repeat units was 20 weight%, was used as the second binder during the process of manufacturing the separator.

**Comparative Example 6**

Comparative Example 6 was carried out in the same way as Example 2, except that the inorganic particle having an aspect ratio of 11 was used during the process of manufacturing the separator.

**Comparative Example 7**

Comparative Example 7 was carried out in the same way as Example 2, except that the stack of the positive electrode, the negative electrode, and the separator was heated and pressed under a temperature condition of 20°C and a pressure condition of 1 MPa instead of a temperature condition of 60°C and a pressure condition of 3 MPa.

**Comparative Example 8**

Comparative Example 8 was carried out in the same way as Example 2, except that the stack of the positive electrode, the negative electrode, and the separator was heated and pressed under a temperature condition of 80°C and a pressure condition of 6 MPa instead of a temperature condition of 60°C and a pressure condition of 3 MPa.

**Comparative Example 9**

Comparative Example 9 was carried out in the same way as Example 2, except that the activation process of the secondary battery was performed when a state of charge (SOC) was 25% and a pressure condition was 0.3 kgf/cm$^2$.

**Comparative Example 10**

Comparative Example 10 was carried out in the same way as Example 2, except that the activation process of the secondary battery was performed when a state of charge (SOC) was 80% and a pressure condition was 10 kgf/cm$^2$.

**Comparative Example 11**

Comparative Example 11 was carried out in the same way as Example 1, except that the porous substrate was stretched in the direction MD at 100°C by 6 times and the porous substrate was stretched in the direction TD at 125°C by 5.5 times during the process of manufacturing the separator, and the modulus of the manufactured separator was 2,000 (kgf/cm$^2$).

**Comparative Example 12**

Comparative Example 12 was carried out in the same way as Example 1, except that the porous substrate was stretched in the direction MD at 100°C by 11 times and the porous substrate was stretched in the direction TD at 125°C by 10 times during the process of manufacturing the separator, and the modulus of the manufactured separator was 10,000 (kgf/cm$^2$).

**Comparative Example 13**

Comparative Example 13 was carried out in the same way as Example 1, except that a weight ratio of the first and second binders to the inorganic particles in the slurry was set to 10:90 during the process of manufacturing the separator, and a coefficient of kinetic friction of the manufactured separator was 0.1.

**Comparative Example 14**

Comparative Example 14 was carried out in the same way as Example 1 except that a weight ratio of the first and second binders to the inorganic particles in the slurry was set to 60:40 during the process of manufacturing the separator, and a coefficient of kinetic friction of the manufactured separator was 0.4.

[Table 1]

| | Physical property | Example 1 | Example 2 | Comparative Example 1 | Comparative Example 2 | Comparative Example 3 | Comparative Example 4 |
|---|---|---|---|---|---|---|---|
| Experimental Example 1 | Dry bonding force to positive electrode (gf/20 mm) | 14 | 12 | 7 (Defective) | 20 | 5 (Defective, binder melted during hot blast drying) | 9 |
| | Dry bonding force to negative electrode (gf/20 mm) | 16 | 15 | 6 (Defective) | 19 | 8 | 6 (Defective) |
| Experimental Example 2 | Wet bonding force to positive electrode (gf/20 mm) | 3.4 | 3.8 | - | 3.8 | - | - |
| | Wet bonding force to negative electrode (gf/20 mm) | 4.1 | 4.9 | - | 1.2 (Defective) | - | - |
| Experimental Example 3 | Content of separator surface fluorine (F) (wt.%) | 4.5 | 5 | - | 2.5 | - | - |
| Experimental Example 4 | Bending level (mm) | 1.0 | 0.5 | - | | - | - |
| Experimental Example 5 | Separator resistance after activation process (Ohm) | 0.8 | 0.84 | - | 0.89 | - | - |

(continued)

|  | Physical property | Example 1 | Example 2 | Comparative Example 1 | Comparative Example 2 | Comparative Example 3 | Comparative Example 4 |
|---|---|---|---|---|---|---|---|
| Experimental Example 7 | Contraction ratio (%) (130°C, MD/TD) | 3/3 | 3/3 | 3/2 | 3/3 | 3/3 | 3/3 |
| Experimental Example 8 - Assembling Process Performance | Creased | Absent | Absent | Absent | Absent | Absent | Absent |
|  | Misaligned | Good | Good | Good | Good | Good | Good |

[Table 2]

|  | Physical property | Comparative Example 5 | Example 3 | Comparative Example 6 | Comparative Example 7 | Comparative Example 8 | Comparative Example 9 |
|---|---|---|---|---|---|---|---|
| Experimental Example 1 | Dry bonding force to positive electrode (gf/20 mm) | 15 | 15 | 6 (Defective, deterioration in migration) | 14 | 39 | 17 |
|  | Dry bonding force to negative electrode (gf/20 mm) | 13 | 13 | 11 | 16 | 33 | 16 |
| Experimental Example 2 | Wet bonding force to positive electrode (gf/20 mm) | 1.1 (Defective) | 8.8 | 2.2 | 2.1 | 12.1 | 2.5 |
|  | Wet bonding force to negative electrode (gf/20 mm) | 0.8 (Defective) | 6.4 | 0.7 (Defective) | 0.9 (Defective) | 15.6 (Defective) | 0.65 (Defective) |
| Experimental Example 3 | Content of separator surface fluorine (F) (wt.%) | 4.6 | 13 | 2 | 4.3 | 3.1 | 4.2 |
| Experimental Example 4 | Bending level (mm) | 0.3 | 8.4 | 2.2 | 0.4 | 7 | 3.1 |
| Experimental Example 5 | Separator resistance after activation process (Ohm) | 0.83 | 1.38 | 0.91 | 0.85 | 0.88 | 0.87 |
| Experimental Example 7 | Contraction ratio (%) (130°C, MD/TD) | 3/3 | 3/3 | 3/3 | 3/2 | 3/3 | 3/3 |

(continued)

| | Physical property | Comparative Example 5 | Example 3 | Comparative Example 6 | Comparative Example 7 | Comparative Example 8 | Comparative Example 9 |
|---|---|---|---|---|---|---|---|
| Experimental Example 8 - Assembling Process Performance | Creased | Absent | Absent | Absent | Absent | Absent | Absent |
| | Misaligned | Good | Good | Good | Good | Good | Good |

[Table 3]

| | Physical property | Comparative Example 10 | Comparative Example 11 | Comparative Example 12 | Comparative Example 13 | Comparative Example 14 |
|---|---|---|---|---|---|---|
| Experimental Example 1 | Dry bonding force to positive electrode (gf/20 mm) | 15 | - | - | - | - |
| | Dry bonding force to negative electrode (gf/20 mm) | 16 | - | - | - | - |
| Experimental Example 2 | Wet bonding force to positive electrode (gf/20 mm) | 11.4 | - | - | - | - |
| | Wet bonding force to negative electrode (gf/20 mm) | 17.1 (Defective) | - | - | - | - |
| Experimental Example 3 | Content of separator surface fluorine (F) (wt.%) | 3.8 | - | - | - | - |
| Experimental Example 4 | Bending level (mm) | 8.9 | - | - | - | - |
| Experimental Example 5 | Separator resistance after activation process (Ohm) | 1.22 | - | - | - | - |
| Experimental Example 7 | Contraction ratio (%) (130°C, MD/TD) | 3/3 | 3/3 | 50/52 | 2/2 | 45/50 |
| Experimental Example 8 - Assembling Process Performance | Creased | Absent | Defective | Absent | Absent | Defective |
| | Misaligned | Good | Defective | Good | Defective | Defective |

In Tables 1 to 3, the bonding force to the positive electrode means the bonding force of the separator with respect to the positive electrode, and the bonding force to the negative electrode means the bonding force of the separator with respect to the negative electrode.

It can be seen that because the wet bonding force and the dry bonding force of the separator to the negative electrode and the positive electrode had appropriate values in Examples 1 and 2, the electrode assemblies in Examples 1 and 2 were not bent.

In Comparative Examples 1, 3, and 4, because the dry bonding force of the separator with respect to the negative or positive electrode was excessively low, the process subsequent to the process of manufacturing the electrode assembly could not be performed, and the wet bonding force of the separator could not be measured. An excessively large amount of fluorine-based polymers were used in the coating layer of the separator in Comparative Example 1, and Comparative Examples 3 and 4 were different in contents of the comonomer of the acrylic-based polymer in the coating layer of the separator. In Comparative Example 3, Tg of the acrylic-based copolymer was low, and the acrylic-based copolymer was melted during the process. In Comparative Example 4, Tg of the acrylic-based copolymer was excessively high, and the dry bonding force to the negative electrode was excessively low, such that the process could not be performed because of deterioration in assembling process performance.

Like the disclosed results of Experimental Examples 7 and 8, in Comparative Examples 11 to 14, the electrode assembly could not be manufactured, and the wet bonding force could not be measured after the electrode assembly was manufactured. In Comparative Example 11, the elastic modulus of the separator was low during the zigzag stacking process, such that the separator was creased. In Comparative Example 12, the contraction ratio of the separator was 50% or more, and the misalignment defect occurred. In Comparative Example 13, the separator having an excessively small coefficient of kinetic friction was used, and a slip occurred between the separator and the electrode. In Comparative Example 14, the separator having an excessively large coefficient of kinetic friction was used, and the friction was excessively high during the process, such that the misalignment defect occurred while the separator operated.

In Comparative Examples 2, 5, 7, and 9, the wet bonding force of the separator with respect to the negative or positive electrode was excessively low, and overhang occurred in the stack, such that there occurred a problem in that an edge portion sagged when the cell was moved upward.

A binder with low specific gravity needs to move to the surface at the time of drying the slurry of the separator, and when the inorganic particles are uniform in shape, the binder easily moves. However, in Comparative Example 6, because the inorganic particles having large aspect ratios were randomly distributed, it was difficult for the binder to move to the surface by being hindered by the particles at the time of drying the slurry (deterioration in migration of the binder), and the dry bonding force of the separator with respect to the positive electrode and the wet bonding force of the separator with respect to the negative electrode were very low.

In Comparative Examples 8 and 10, the wet bonding force of the separator with respect to the negative electrode was excessively high, and the bending level was high.

Therefore, it can be seen that because the electrode assembly of the present application is not bent, the position of the electrode may be aligned and fixed without being distorted, such that the energy density may be improved, and the electrode assembly and the secondary battery including the same may be in excellent in performance.

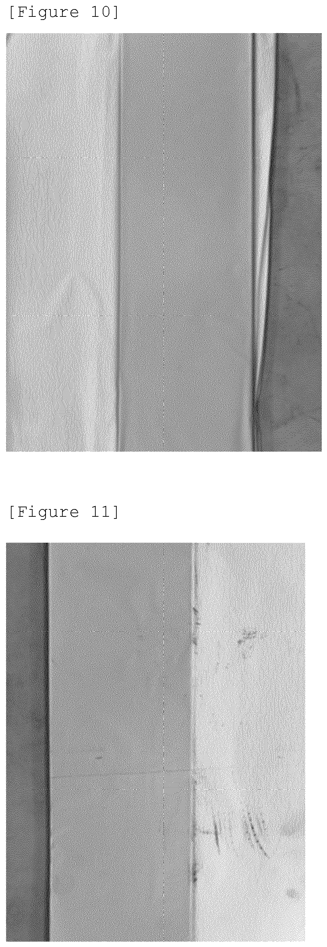

As illustrated in FIG. 10, it can be seen that the separator of the electrode assembly of Example 1 was not creased. As illustrated in FIG. 11, it can be seen that the separator of the electrode assembly in Comparative Example 14 was creased. In FIG. 11, a horizontal line is formed on a middle portion, and the line means a crease.

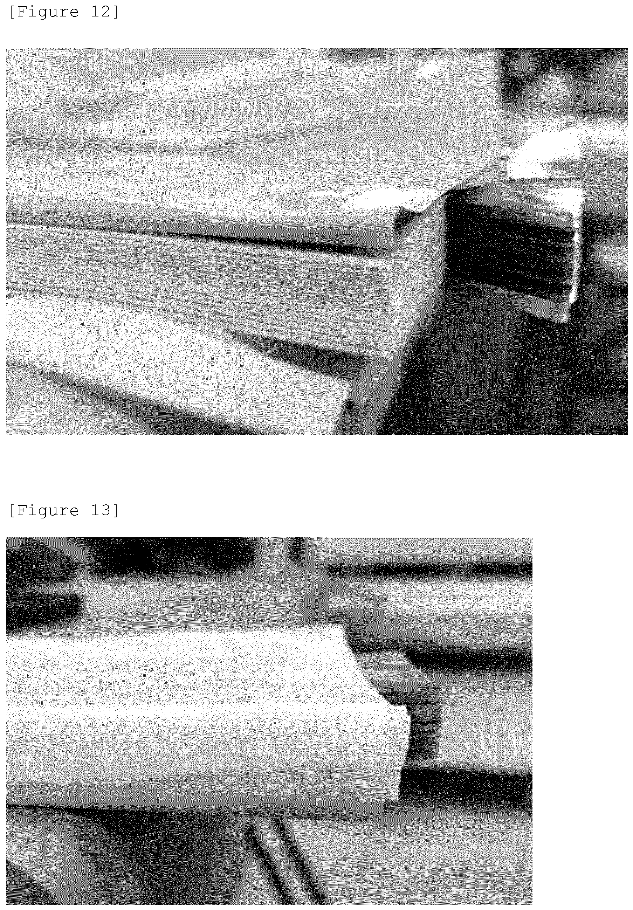

In addition, as illustrated in FIG. 12, it can be seen that the end of the separator of the electrode assembly in Example 1 was appropriately aligned (the end of the separator was not misaligned by 1 mm or more). In contrast, as illustrated in FIG. 13, it can be seen that the end of the separator of the electrode assembly in Comparative Example 11 was misaligned by 1 mm or more without being appropriately aligned. This is determined to be caused by the misalignment of the separator supplied during the process of manufacturing the electrode assembly in Comparative Example 11.

[Explanation of Reference Numerals and Symbols]

1: Porous substrate
2: Organic/inorganic composite porous coating layer
3: Inorganic particle
4: Fluorine-based polymer
5: Acrylic-based polymer
10: Electrode assembly
11: Positive electrode
12: Negative electrode
14: Separator
51: Gripper
51a: Main body

51b: Fixing part
100: Electrode assembly manufacturing apparatus
110: Stack table
111: Table body
112: Stack table heater
120: Separator supply part
121: Separator heating part
122: Separator roll
130: Positive electrode supply part
131: Positive electrode seating table
132: Positive electrode heater
133: Positive electrode roll
134: First cutter
135: First conveyor belt
136: Positive electrode supply head
140: Negative electrode supply part
141: Negative electrode seating table
142: Negative electrode heater
143: Negative electrode roll
144: Second cutter
145: Second conveyor belt
146: Negative electrode supply head
150: Positive electrode stacking part
151: First suction head
151a: Vacuum inlet port
151b: Bottom surface
152: First head heater
153: First movement part
160: Negative electrode stacking part
161: Second suction head
162: Second head heater
163: Second movement part
170: Holding device
171: First holding device
172: Second holding device
180: Press part
181

**Claims**

1.  An electrode assembly comprising:

    a positive electrode;
    a negative electrode; and
    a separator provided between the positive electrode and the negative electrode,
    wherein a wet bonding force of the separator with respect to the negative electrode is 1.5 gf/20 mm or more and 15 gf/20 mm or less.

2.  The electrode assembly of claim 1, wherein a dry bonding force of the separator with respect to the negative electrode is 8 gf/20 mm or more and 25 gf/20 mm or less.

3.  The electrode assembly of claim 1, wherein the wet bonding force of the separator with respect to the negative electrode is 4 gf/20 mm or more and 6 gf/20 mm or less.

4.  The electrode assembly of claim 1, wherein the separator includes fluorine (F) of 0.1 to 8 parts by weight based on 100 parts by weight of a separator surface composition.

**5.** The electrode assembly of claim 1, wherein the wet bonding force of the separator with respect to the negative electrode is one or more times a wet bonding force of the separator with respect to the positive electrode.

**6.** The electrode assembly of claim 1, wherein the wet bonding force of the separator with respect to the negative electrode is one or more times and 1.4 or less times a wet bonding force of the separator with respect to the positive electrode.

**7.** The electrode assembly of claim 1, wherein the negative electrode includes a silicon-based active material.

**8.** The electrode assembly of claim 1, wherein the electrode assembly has an overall length of 400 to 600 mm and an overall width of 50 to 150 mm.

**9.** The electrode assembly of claim 1, wherein the separator comprises:

a porous substrate; and
an organic/inorganic composite porous coating layer provided on at least one of one surface or the other surface of the porous substrate,
wherein the organic/inorganic composite porous coating layer comprises:

a particulate binder resin; and
an inorganic particle,
wherein the particulate binder resin comprises:

an acrylic-based polymer; and
a fluorine-based polymer, and
wherein a weight ratio between the acrylic-based polymer and the fluorine-based polymer is 20:80 to 60:40.

**10.** The electrode assembly of claim 9, wherein a modulus of the separator measured in a supply direction (machine direction (MD)) of the separator is 4,000 kgf/cm$^2$ or more and less than 10,000 kgf/cm$^2$, and a coefficient of kinetic friction of the separator is more than 0.1 and 0.35 or less.

**11.** The electrode assembly of claim 9, wherein a glass transition temperature (Tg) of the acrylic-based polymer is 40 to 60°C.

**12.** The electrode assembly of claim 9, wherein the acrylic-based polymer is a (meth)acrylic acid ester-styrene copolymer, and the styrene is 50 to 80 parts by weight based on 100 parts by weight of a comonomer that constitutes the acrylic-based polymer.

**13.** The electrode assembly of claim 9, wherein the fluorine-based polymer is a copolymer (PVdF-HFP) of vinylidene fluoride and hexafluoro propylene (HFP), and the hexafluoro propylene is 3 to 18 parts by weight based on 100 parts by weight of the comonomer that constitutes the copolymer (PVdF-HFP).

**14.** The electrode assembly of claim 9, wherein the inorganic particle has a non-rectangular structure.

**15.** The electrode assembly of claim 1, wherein the separator is folded in a zigzag manner and stacked.

**16.** A secondary battery comprising:

a sealed battery casing;
the electrode assembly according to any one of claims 1 to 15 included in the battery casing; and
an electrolyte included in the battery casing,
wherein the secondary battery satisfies Expression 1 below,

$$[\text{Expression 1}]$$

$$X < 5 \text{ mm}$$

in Expression 1, X represents a maximum distance measured from an imaginary reference line, which connects two opposite sides of an upper surface of the secondary battery, to a lowest point of the upper surface of the secondary battery in a state in which the secondary battery is placed on a flat surface so that a concave surface of the secondary battery is directed upward after an activation process of the secondary battery.

17. A method of manufacturing a secondary battery, the method comprising:

loading the electrode assembly according to any one of claims 1 to 15 into a battery casing;
sealing the battery casing;
injecting an electrolyte into the battery casing; and
activating the secondary battery,
wherein the method satisfies Expression 1 below,

$$[\text{Expression 1}]$$

$$X < 5 \text{ mm}$$

in Expression 1, X represents a maximum distance measured from an imaginary reference line, which connects two opposite sides of an upper surface of the secondary battery, to a lowest point of the upper surface of the secondary battery in a state in which the secondary battery is placed on a flat surface so that a concave surface of the secondary battery is directed upward after an activation process of the secondary battery.

18. The method of claim 17, further comprising:
laminating the positive electrode, the negative electrode, and the separator under a condition of a temperature of 30 to 90°C, a pressure of 2 to 5 MPa, and a time of 15 to 30 seconds, prior to the loading of the electrode assembly into the battery casing.

19. The method of claim 17, wherein the activating of the secondary battery comprises degassing after charging the secondary battery one or more times under a condition of a temperature of 25 to 60°C, a pressure of 0.1 to 0.9 MPa, an electric current of 0.2 to 0.8 C, and a state of charge (SOC) of 30 to 60%.

[Figure 1]

[Figure 2]

[Figure 3]

[Figure 4]

(a)

(b)

[Figure 5]

[Figure 6]

[Figure 7]

[Figure 8]

[Figure 9]

(a)

(b)

[Figure 10]

[Figure 11]

[Figure 12]

[Figure 13]

<table>
<tr><td colspan="2">**INTERNATIONAL SEARCH REPORT**</td><td>International application No.<br><br>**PCT/KR2023/020757**</td></tr>
</table>

| A. | CLASSIFICATION OF SUBJECT MATTER |
|---|---|

**H01M 50/46**(2021.01)i; **H01M 10/04**(2006.01)i; **H01M 10/0585**(2010.01)i; **H01M 50/446**(2021.01)i; **H01M 50/451**(2021.01)i; **H01M 4/36**(2006.01)i; **H01M 4/587**(2010.01)i; **H01M 4/48**(2010.01)i

According to International Patent Classification (IPC) or to both national classification and IPC

| B. | FIELDS SEARCHED |
|---|---|

Minimum documentation searched (classification system followed by classification symbols)

H01M 50/46(2021.01); B29C 48/00(2019.01); B29C 48/18(2019.01); H01M 10/42(2006.01); H01M 50/40(2021.01); H01M 50/403(2021.01); H01M 50/409(2021.01); H01M 50/426(2021.01); H01M 50/446(2021.01); H01M 50/457(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 웨트 접착력(wet adherence), 음극(cathode), 코팅(coating)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0155838 A (SAMSUNG SDI CO., LTD.) 24 November 2022 (2022-11-24)<br>See paragraphs [0077]-[0160] and claims 1 and 15. | 1-8,15 |
| Y | | 9-14 |
| A | | 16-19 |
| Y | KR 10-2021-0021585 A (SHENZHEN SENIOR TECHNOLOGY MATERIAL CO., LTD.) 26 February 2021 (2021-02-26)<br>See claim 1. | 9-14 |
| Y | KR 10-2477643 B1 (LG ENERGY SOLUTION, LTD.) 13 December 2022 (2022-12-13)<br>See claims 1-6. | 12,13 |
| A | KR 10-2020-0107602 A (LG CHEM, LTD.) 16 September 2020 (2020-09-16)<br>See entire document. | 1-19 |

| ✓ Further documents are listed in the continuation of Box C. | ✓ See patent family annex. |
|---|---|

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 April 2024** | **05 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | International application No. |
|---|---|
| | **PCT/KR2023/020757** |

**C. DOCUMENTS CONSIDERED TO BE RELEVANT**

| Category* | Citation of document, with indication, where appropriate, of the relevant passages | Relevant to claim No. |
|---|---|---|
| A | KR 10-1964056 B1 (W-SCOPE KOREA CO., LTD.) 03 April 2019 (2019-04-03)<br>See entire document. | 1-19 |

Form PCT/ISA/210 (second sheet) (July 2022)

**INTERNATIONAL SEARCH REPORT**
**Information on patent family members**

International application No.

**PCT/KR2023/020757**

| Patent document cited in search report | | | Publication date (day/month/year) | Patent family member(s) | | | Publication date (day/month/year) |
|---|---|---|---|---|---|---|---|
| KR | 10-2022-0155838 | A | 24 November 2022 | CN | 117296196 | A | 26 December 2023 |
| | | | | US | 2023-0361427 | A1 | 09 November 2023 |
| | | | | WO | 2022-245083 | A1 | 24 November 2022 |
| KR | 10-2021-0021585 | A | 26 February 2021 | CN | 110859053 | A | 03 March 2020 |
| | | | | CN | 116130885 | A | 16 May 2023 |
| | | | | EP | 3817092 | A1 | 05 May 2021 |
| | | | | EP | 3817092 | A4 | 14 July 2021 |
| | | | | JP | 2021-529415 | A | 28 October 2021 |
| | | | | JP | 7217297 | B2 | 02 February 2023 |
| | | | | US | 2021-0265702 | A1 | 26 August 2021 |
| | | | | WO | 2020-000164 | A1 | 02 January 2020 |
| KR | 10-2477643 | B1 | 13 December 2022 | CN | 112640196 | A | 09 April 2021 |
| | | | | EP | 3916836 | A1 | 01 December 2021 |
| | | | | JP | 2021-535545 | A | 16 December 2021 |
| | | | | JP | 7098050 | B2 | 08 July 2022 |
| | | | | KR | 10-2020-0130134 | A | 18 November 2020 |
| | | | | KR | 10-2543254 | B1 | 13 June 2023 |
| | | | | US | 2022-0006156 | A1 | 06 January 2022 |
| | | | | WO | 2020-226370 | A1 | 12 November 2020 |
| KR | 10-2020-0107602 | A | 16 September 2020 | | None | | |
| KR | 10-1964056 | B1 | 03 April 2019 | KR | 10-2018-0032727 | A | 02 April 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220177177
- KR 1020220177190
- KR 1020220177156
- KR 1020130132230

**Non-patent literature cited in the description**

- *Journal of Materials Chemistry*, 2012, vol. 22, 341